# EUROPEAN PATENT APPLICATION

(11) **EP 1 788 539 A1**
(43) Date of publication of application: **23.05.2007**
(21) Application number: 05757088.9
(22) Date of filing: 09.06.2005
(51) Int. Cl.: G09B 5/08, G09B 23/28

(54) **DISSECTING SAMPLE SHARING SYSTEM**

(30) Priority: 27.08.2004 CN 200420092141
(71) Applicant: Motic China Group Co., Ltd., Xiamen Fujian 361006 (CN)
(72) Inventor: YEUNG, Richard Motic Building, Fujian 361006 (CN)
(74) Representative: Beattie, Alex Thomas Stewart
(86) International application number: PCT/CN2005/000819
(87) International publication number: WO 2006/021134

(57) **Abstract**

The present invention relates to a dissecting sample sharing system that is composed of a room terminal system and a central control system. The room terminal system at least includes a computer, an image partitioning device and one or more dissecting table units which have image collecting function. The computer sends designation signals to a control case in each dissecting table unit. The control case controls the dissecting table according to the designation signals, and synchronously sends the visual signals, which are obtained from the image collecting device in the dissecting table unit to the image partitioning device. The image partitioning device sends the visual signals to the room terminal system. The central control system is composed of a central control computer and central control software that are connected through network to have communion with each other. The present invention realizes the sample information supply to remote people, it also have interaction system for operators thereby achieves the progress of teaching and research.

## Description

### Technical Field

This utility model relates to computer and camcorder field, especially the system of computer connecting and controlling several microscope camcorders.

### Background

Generally, when the dissecting sample is performed during classroom, a student performs the sample dissecting at a dissecting table. Due to the relative small partial of the details of dissecting sample, only the main operator knows the details of the sample dissected on the table, while teacher could not be aware of students when they perform the operation on each dissecting table thoroughly, neither could other students. Moreover, the source of samples for teaching is limited; the typical dissecting example shall be demonstrated to all students. However, teacher could neither carry out teaching of dissecting details through video and audio nor communicate with students and guide them. Therefore, such dissecting teaching and learning class is not adequately helpful or effective because not every student can perform the dissecting on his or her own. Even if the students watch the operation surrounding the dissecting table, the problem of blurriness remains.

On the other hand, in the field of medical pathology dissecting teaching and practical field, the dissected tissue samples generally have to be taken away to study by pathology experts, and doctors or teachers work out the treatment plan according to the diagnosis from the experts. At present, this taking sample method cannot meet the demand of quick observation and diagnosis for experts and it limits the experts to service only one hospital. It prevents pathology experts from service widely towards other people fast and also prevents enhancing the efficiency and sharing the precious resources.

Currently, at home and abroad, the problem described above has not been solved in dissecting field.

### Invention Description

The utility model provides a dissecting sample sharing system, which enables concerning people to simultaneously observe, store and process the image information collected by zoom camcorder and portable camcorder with one computer in laboratory or classroom and this image information may also be transferred to another computer outside laboratory or classroom, which is controlled by pathology expert. The expert analyzes and processes the image information and sends his diagnosis suggestion back to laboratory or classroom through computer. In such way, the two-way communication between teacher and pathology expert through video and audio in teaching is accomplished.

In order to achieve the purpose described above, the new utility model is composed of a room terminal system (laboratory or classroom) and a central control system. The connection of these two parts is built through the network transmission between the room terminal computer of the room terminal system and the central control computer of the central control system. The room terminal system consists of a room terminal computer with software installed, an image partitioning device and one or more dissecting table units. Each control case unit corresponds to one dissecting table unit. The control case is connected to computer and sends control signal. The room terminal computer controls various parts of dissecting table unit through its control over control case. It may connect with several image partitioning devices and control several control case units. The control case connects with image partitioning device and sends the visual signals. The dissecting table unit is composed of fixed support, camcorder, control case, control keyboard, image display monitor, all movable cradle head, etc.

The central control system is composed of a central control computer and central control software. The central control computer analyzes image information collected from room terminal computer with the functions of central control software, such as user management, video recording, catching moving and still images, white balance, etc. and sends the analysis comments to the room terminal computer which sends image information or to other room terminal computers connecting with it.

The dissecting table unit mentioned above may be one unit or more units.
The room terminal computer mentioned above may be one or more connecting with central control computer.
The camcorder head mentioned above has two kinds, one is zoom camcorder and other is portable camcorder head. Zoom camcorder head is fixed at a designated position above the dissecting table, while portable camcorder head is not fixed at a designated position but held in hand. Portable camcorder head is connected with control case and it receives designation from it and acts accordingly. The control case controls image collecting, power supply or the switch between zoom camcorder head and portable camcorder head. Zoom camcorder head could be composed of 1:22 continuous zoom optical lens zooming continuously and turn 359°. The control keys and software control the zooming and angle of camcorder head. Control keyboard may be operated in hand control mode or foot control mode or both. The monitor is fixed above and by the side of the dissecting table, which can show the image shot by the camcorder.

The computer mentioned above may be only one, in which room terminal software is installed for image processing and analysis and audio system control. Thus the computer has the functions of image collection and analysis, output and communication.

The control case mentioned above connects with the computer through image processing software or communication cable, which transmits control signals. The control case connects with the image partitioning device through image processing
software or video cord which transmits image collection signals. Control case is equipped with audio controller. With the single-chip microcomputer technology, the control case controls the control keyboard, all movable cradle head, zoom camcorder head, portable camcorder head, video amplifier distributor, etc and various movements of all movable cradle head and zoom camcorder head and audio controller. The control keyboard is a connection controller which controls the movements of cradle head and zooming, focus adjustment, background light adjustment of the camcorder, call and so on. When the key operation on the scanning keyboard is switched to all movable cradle head, above which a camcorder is fixed, and the control case sends designation signals for cradle head movement, then zoom camcorder can catch images. The control keyboard may be operated in the hand control mode or foot control mode or both.

The movable cradle head mentioned above may lead the camcorder head on it to turn left and right, up and down. Zoom camcorder head may catch image with its continuous zoom shooting device.

The image partitioning device mentioned above may be multi-image partitioning device. It is controlled by computer and corresponds to individual dissecting table unit. The number of dissecting table units input computer determines the number of images of image partitioning device sent to computer.

The utility model is equipped with audio control box, its one end is connected to the sound card of terminal computer inside the room and the other end is connected to the audio controller in the control case of each dissecting table unit, literal communication may be achieved among people in the central control room, laboratory or classroom. All the audio controllers are equipped with microphones or speakers with volume control buttons. Microphone and wireless interphone may be connected to the sound card of computer to realize the speech with the people in the laboratory. The utility model is also equipped with video amplifier distributor, which can amplify single-channel video signal and distribute it into multi-channel video signals. In addition, the utility model is attached with projector and LCD.

The central control computer mentioned above may be connected with room terminal computer through network. The central control computer may run the user software of the room terminal computer through the function of starting laboratory or classroom software of its software and then the room terminal computer may connect to the central control computer automatically. Or the user software of the room terminal computer may be started manually and the room terminal computer may be connected to central control computer by clicking the connection button manually.

The central control computer may control room terminal computer and obtain information through its screen control function system. Or the room terminal computer may send the information to be analyzed to central control computer. The central control computer may process and edit information, amplify image or perform other related processing with the functions of its software, such as user management, video recording, catching moving and still images, white balance, etc.

The main functions of the central control software are user management, video recording, catching moving and still images, auto interval catching, setting, console, linkage, basic system, white balance, silencing, background balance and filter lens.

Several units may setup for the user management function and several classes may set for each unit and the stored path of the recorded pictures in each class may be designated.

The function of catching moving and still images is for catching the moving and still images in the current window.

The console mentioned above may automatically control any digital camcorder head to turn on or off, and adjust its brightness, continuous zooming, continuous focus, angle and call for clearance function; adjust picture's brightness.

Linkage function includes one-way linkage, two-way linkage, and non-linkage etc. One-way linkage is to use mouse to select one student channel on the control panel and simultaneously select the corresponding channel on the console, while the channel on the console with the mouse may switch but could not simultaneously switch the corresponding student channel on the control panel. Two-way linkage is to use mouse to select one student channel on the control panel and simultaneously select the corresponding channel on the console, while the student may switch the channel on the console with the mouse and simultaneously switch the corresponding student channel on the control panel. Non-linkage is that the switch of student channel on the control panel with the mouse has no influence on the switch of channel on the console and vice versa.

The main functions of advanced system are color control, white balance, noise-control, background balance, filter lens. The red value, green value and blue value of the images can be adjusted within the range of ±100.

The central control software has the functions of communication, file transmission, window management, member setting, speech communication, image transmission and so on.

Text communication function is for the text communication between dissecting terminal and central control terminal.

File transmission function is for sending files to dissecting terminal.

Speech communication is consisted of broadcast data mode, group mode and dialogue mode.

The broadcast data mode only allows the pathology expert at central control terminal to speak to the people at each room terminal computer landing on the system; the group mode allows pathology expert at central control terminal to join one group of dissecting terminals and to communicate with the dissecting terminals within the group. The dissecting terminals within the group may have dialogue with the doctor at the central control terminal. The pathology expert at the central control terminal may select one group and then click JOIN DISCUSSION GROUP or QUIT DISCUSSION GROUP buttons to join or left the current groups. The dialogue mode allows the pathology expert at the central control terminal to select one dissecting terminal to have dialogue individually. If you want to be heard by other dissecting terminals, please select PUBLIC TALK option.

Image transmission function is performed in such way that central control terminal screen sends its images to all dissecting room terminals. At this moment, the central control terminal may process images while dissecting terminal may not.

DISSECTING ROOM IMAGE option may transmit the image caught by one dissecting terminal camcorder to all the other dissecting terminals. After selecting this option, select one department from the dissecting channel pulldown menu and it may transmit the image to that department, and this function is also called as image download. Those mentioned above are the main functions of the major software of this utility model. No discussion about other software is preceded at this moment.

User may press button or use the software to change the focus of camcorder, zooming in and out, move the camcorder to acquire the expected image effect according to your requirement and transmit the visual signal to image partitioning device and then to computer. All in all, combining with the software, this utility model is advanced and practical.

The main advantages of the utility model:
1. The utility model makes the details of the dissecting process clearer. The camcorder and projector amplifies the images and all the people in the laboratory or classroom can see the dissecting details clearly and get to know the process of operation accurately, as if they were the main operator.
2. The utility model facilitates resource sharing during the dissecting process and enables pathology expert to offer rapid solution. Due to the simultaneous connection of central control computer and the room terminal computers of several laboratories or classrooms, the central control computer may obtain image information from one room terminal computer of a laboratory or classroom and send the analysis comments back to the laboratory or classroom and at the same time send to other laboratories or classrooms to share the resources after pathology expert analyzes and processes it. Moreover, the pathology expert may illustrate the difficulties and answer the students' questions on site combing with the dissecting images with the help of the audio control box connecting with sound cards of room terminal computer and central control computer. In this way, it may greatly save precious samples and reduce the cost of teaching and learning and solve the related problems in time.
3. The portable camcorder of the utility model can catch the images of the internals of the sample or inside and outside and lower surface of the dissected sample where zoom camcorder cannot. It can shoot some unobtainable "dead corner" of the sample.
4. The image partitioning device of the utility model enables the room terminal computer to have 16 image, 9 image and 4 image display. And the user may simultaneously monitor the dissecting processes at several dissecting tables and correct and handle problems timely. It may process the visual signals from the camcorders above the dissecting tables and send them to computer. User may select typical dissecting case and storing, recording, illustrating it timely.
5. The central control computer of the utility model can process and edit the information obtained through the functions of the room terminal software such as, user management, video recording, catching moving and still images, white balance and so on. It enhances the processing efficiency of computer and makes the images clearer and more accurate and the utility model more advanced.

The utility model is a video and audio system integrating electronics and software. This sharing system is especially applicable for the dissecting sample with the feature of high automation.

Attached Figures
Fig. 1 System Construction of Utility Model
Fig. 2 Construction of the Room Terminal System
Fig. 3 Functions of Room Terminal System
Fig. 4 Principles of Utility Model

### Specifications:

The following figures and examples provide further explanation for this utility model.

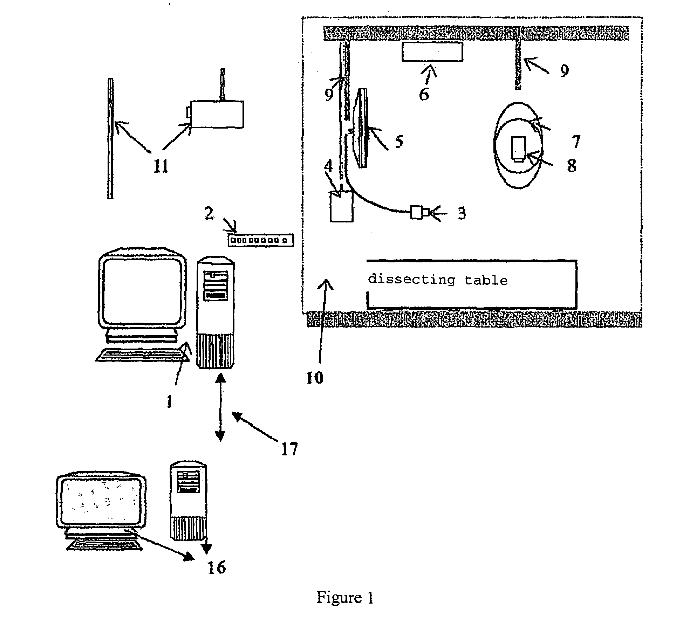

As indicated in figure 1, this utility model is composed of a room terminal system and a central control system.

Room terminal system includes a room terminal computer 1, an image partitioning device 2 (16 image), a control keyboard 4, a monitor 5, a control case 6, an all-movable cradle head 7, an internal zoom camcorder 8, a fixed support 9, and a projecting system 11, etc. Meanwhile, the central control system is composed of a central control computer and central control software. The room terminal system and the central control system are connected through network 17, which enable communication between room terminal computer 1 and central control computer 16 with each other.

The dissecting table unit consists of a fixed support 9, a control case 6, a control keyboard 4, a monitor 5, an all-movable cradle head 7 and a zoom camcorder 8, which is fixed, in it. The control keyboard 4 is connected to the control case. One is able to control the movements of all-movable cradle head 7 and other functions such as zooming of the camcorder by pushing different buttons on the control keyboard 4.

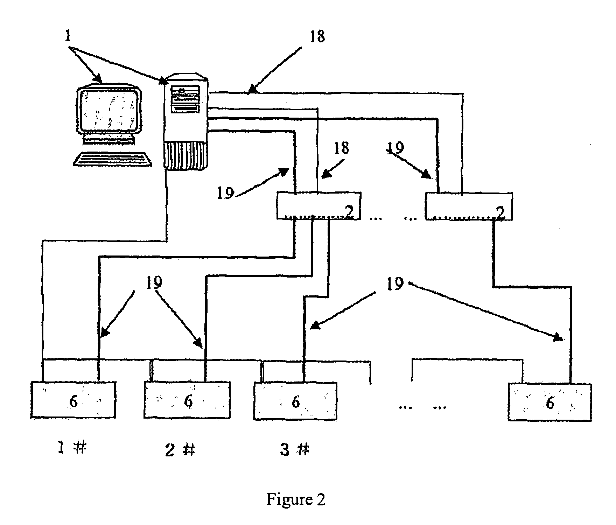

As illustrated in figure 2, the room terminal computer 1 and the image partitioning device 2 are connected through communication control cable 18 with each other; the image partitioning device 2 is connected with the control case through cable 485, which has a function of transmitting software with no limit; computer sends designation signals through cable 18 and 485 to each control case 6; the control case and the image partitioning device are connected through visual signal cable 19 which sends the visual signals. As showed in 3, any dissecting table unit 10 can inform the room terminal computer by using audio system 15, if there is any question. The room terminal computer sends the designation signals of collecting image to the control case. The control case will collect relevant image through the zoom camcorder by controlling the keyboard 4. The collected images will be distributed by video amplifier 8 distributor chosen by the control case and then sent into two channels; one will be sent to the monitor 5 in order to show the image of the sample, the other one will be sent to the image partitioning device 2 for image partitioning before shown in computer 1. Both the all-movable cradle head 7 and its internal zoom camcorder 8 are connected to control case 6. The SCM inside the control case controls the movements of all-movable cradle head 7 and other functions such as zooming of the camcorder; the portable camcorder 3 is connected to the control case as well, so that the control case can switch between portable camcorder and the zoom camcorder according to one's needs.

By using the portable camcorder, one is able to observe the conditions of dissecting sample from various angles or even dead angle. The portable camcorder can be used to collect images from different perspectives. Besides, other procedures are similar to the procedures for operating the zoom camcorder. And finally, the video output will show the collected images.

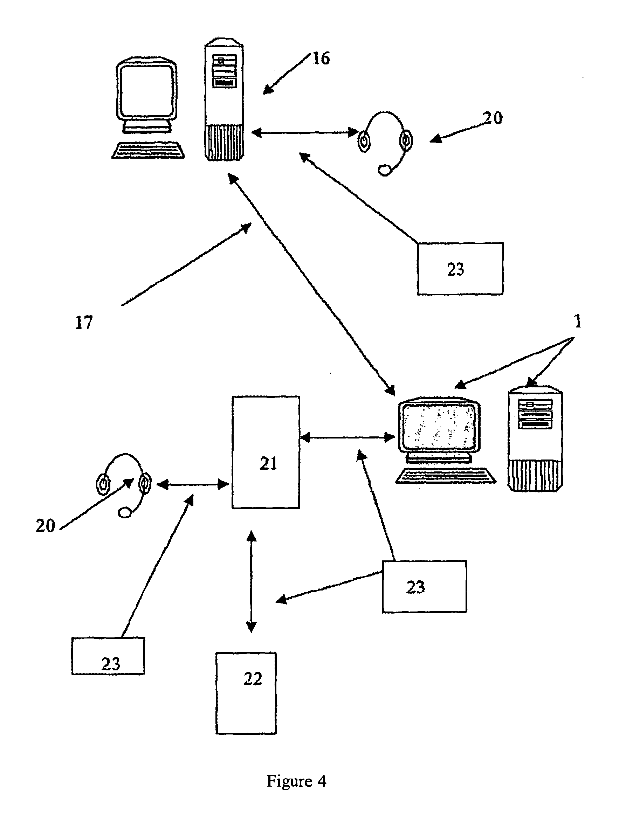

As indicated in figure 4, after the software-controlled audio system is installed, this system can realize the communication between the room terminal computer and staff at the dissecting table through audio controller inside the control case 6. Or one can install the audio system by connecting wireless interphone 20 or microphone power amplifier system 22 to computer 1. Then communication with the room terminal computer 1 can happen by pressing the audio controlling buttons on the control case. The wireless interphone 20 of the room terminal system is connected to the central computer 16 through the audio cord 23. And the wireless interphone 20 or the microphone power amplifier system 22 of the central control system is connected to the earphone, the sound box switcher 21 through the audio cord 23. The earphone and the sound box switcher 21 are connected to the central control computer. Thanks to the switch function of the earphone and the sound box switcher, one can use either the wireless interphone or the microphone power amplifier system.

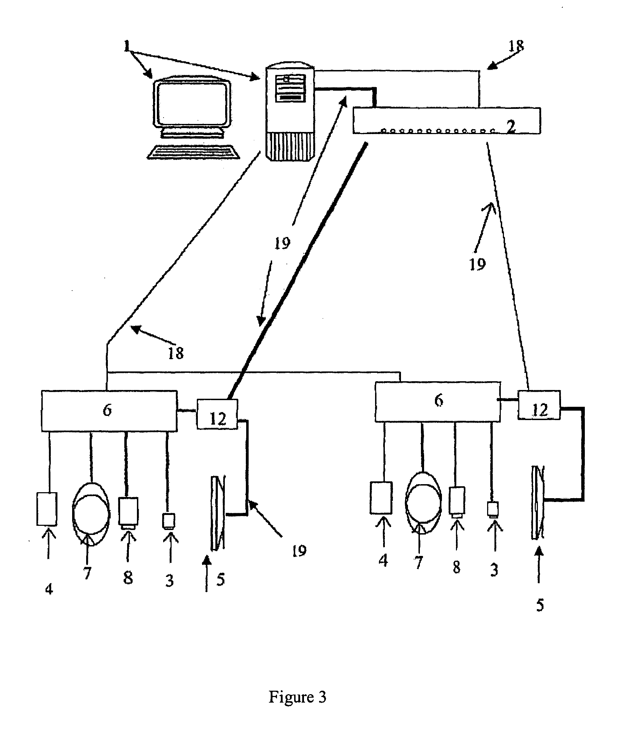

As indicated in figure 1, 2, 3, 4, this utility model of the room terminal system is controlled by a room terminal computer, and can be connected to one or more dissecting table units 10 in figure 1. Computer 1 and the image partitioning device 2 are connected through the communication control cable 18. The room terminal computer 1 sends the designation signals to the control case 6; the control case receives and decodes the signals in its MCU; after decoding, MCU sends the control signals to both the all-movable cradle head 7 and the internal zoom camcorder 8, so that they can collect images according to the signals; then the collected images can be analyzed and processed by the room terminal computer. In this way, the image data collected from one of the dissecting table units can be sent to other units, therefore the sharing of information is realized.

Once the room terminal computer and the central control computer are connected through LAN or Internet with each other, they will be able to communicate with each other by the means of software collecting, information analyzing and processing. The central control computer can obtain information from the room terminal computer. Similarly, the room terminal computer can send the information to be analyzed to the central control computer. After processing, the central computer will send the image information back to the room terminal computer for the purposes of staff and students' learning and reference.

The major functions of the central control software are as follows: user management, video recording, catching still image, auto interval catching, setting, console, linkage, basic system, and advanced system, etc. Through the functions mentioned above, the screen of the room terminal computer 1 can be real-time displayed on the specific display area in the central control computer. The function of screen control enables the central control software to control the room terminal computer 1 and carry out any operation on the room terminal computer 1. When several laboratories or classrooms are available, the central control computer 16 can adopt its image download function to make its screen visible in every laboratory or classroom, and the images can be collected by the terminal computers in all the rooms.

Free communication between the central control system and the laboratory or classroom terminal can be achieved by using either software's audio communicating and text functions or microphone.

If a question found out in any of dissecting table units and its needs to do further discussion, the person in a laboratory or classroom can call the central control system by using the audio calling function above. After the central control computer 16 responses, it can control the room terminal computer 1 through the screen control function. It can then amplify the image of the calling unit or take other relevant measures. The image data can also be enlarged by using the projecting system 11, if the administrator in the room terminal thinks it is necessary. Afterward, combining with the wireless interphone or the microphone power amplifier system, the pathologist can explain to or have a discussion with teachers in the room terminal. Meanwhile, through the image downloading function and the screen sharing function, one can make the whole process available for any other classrooms.

## Claims

1. It is a type of dissecting sample sharing system, which is composed of a room terminal system and a central control system. The room terminal system and the central control system can be connected through network between their computers with each other. And its features are as follows: the room terminal system at least includes a computer, one or more dissecting table units which have image collecting function and an image partitioning device. The room terminal computer is connected to over one image partitioning devices, and the image partitioning devices are connected to the control cases of the dissecting table units. Through the control case connections, the room terminal computer can control one or more dissecting table units. The central control system consists of a central control computer and central control software. The two systems can have communication with each other by the means of software collecting, information analyzing and processing.

2. According to the dissecting sample sharing system described in Patent Claim 1, its features are as follows:
The dissecting table unit described above mainly includes a control case, an all-movable cradle head and a camcorder. The camcorder can either be a zoom camcorder or a portable camcorder. For the zoom camcorder, it will be fixed in a certain position above the table. The portable camcorder, however, is free from fixing and is movable. The number of control case can be one or more, which is decided by the number of dissecting table units. Each dissecting table unit is controlled by one relevant control case.
The control case is connected to the image partitioning device, so that the collected visual signals can be sent. The control case is also connected to the computer, so that the designation from the terminal computer can be sent. The computer controls the dissecting tables through the control case units.

3. According to the dissecting sample sharing system described in Patent Claim 1, its features are as follows: the total amount of all image partitioning devices' images is equivalent to or over the number of all dissecting table units

4. According to the dissecting sample sharing system described in Patent Claim 1, its features are as follows: the control case and the image partitioning device can be connected through either image processing software or visual signal cable with each other, in order to send visual signals. And the control case and the computer can be connected through either image processing software or communication control cable with each other, so as to send designation signals.

5. According to the dissecting sample sharing system described in Patent Claim 2, its features are as follows: the zoom camcorder is composed of 1:22 continuous zoom optical lens which zooms can turn 359°.

6. According to the dissecting sample sharing system described in Patent Claim 2, its features are as follows: besides a control case, an all-movable cradle head and a camcorder, the other major parts of dissecting table unit includes a fixed support, a control keyboard and a monitor. A monitor is fixed above the dissecting table or on the table.

7. According to the dissecting sample sharing system described in Patent Claim 2, its features are as follows: the zoom camcorder is fixed in the all-movable cradle head.

8. According to the dissecting sample sharing system described in Patent Claim 1, its features are as follows: one central control computer can be connected to one or more room terminal computers in laboratories or classrooms.

9. According to the dissecting sample sharing system described in Patent Claim 1, its features are as follows: the audio system, wireless interphone or microphone power amplifier system can be attached. One end of the general audio control case is connected to sound cards in both room terminal computer and central control computer, the other end is connected to the audio controller inside the control case of each dissecting unit.

10. According to the dissecting sample sharing system described in Patent Claim 2, its features are as follows: SCM control is adopted inside the control case.

11. According to the dissecting sample sharing system described in Patent Claim 2, its features are as follows: the control keyboard can switch into hand control, foot control, or even the combination of both hand control and foot control.

12. According to the dissecting sample sharing system described in Patent Claim 1, its features are as follows: the projecting system, LCD system, etc can be attached.

13. According to the dissecting sample sharing system described in Patent Claim 1, its features are as follows: the control case and the computer are connected through communication cable 485.

14. According to the dissecting sample sharing system described in Patent Claim 1, its features are as follows: the central control software has functions of user management, video recording, catching moving and still images, white balance, etc. It can also serve to analyze the collected image data, and then send the analysis result to the computers in the image database or other room terminal computers connected with the central control computer.

15. According to the dissecting sample sharing system described in Patent Claim 14, its features are as follows: both dynamic filtering and white balance software are adopted in its design, in order to obtain or process image. By defining the color rating of the environment, the image can be adjusted into the best true color. Then it can be viewed on the specific area or the even whole area of monitor or screen.
